# FASCICULE DE BREVET EUROPEEN

(11) **EP 1 124 424 B1**
(45) Date de publication et mention de la délivrance du brevet: **02.07.2003**
(21) Numéro de dépôt: 99939497.6
(22) Date de dépôt: 24.08.1999
(51) Int. Cl.: A01N 59/20, A01N 25/04

(54) **COMPOSITION LIQUIDE A ACTIVITE FONGICIDE, BACTERICIDE OU BACTERIOSTATIQUE**
FLÜSSIGE ZUSAMMENSETZUNG MIT FUNGIZIDER, BAKTERIZIDER UND BAKTERIOSTATISCHER WIRKSAMKEIT
LIQUID COMPOSITION WITH FUNGICIDE, BACTERICIDAL AND BATERIOSTATIC ACTIVITY

(30) Priorité: 26.10.1998 FR 9813381
(43) Date de publication de la demande: 22.08.2001
(73) Titulaire: ACTION PIN, 40100 Dax (FR)
(72) Inventeur: DUFAU, Ghislain, F-40100 Dax (FR); BARSACQ, Michel, F-40100 Dax (FR); MOLLA, Gérard, F-40100 Dax (FR)
(74) Mandataire: Jacobson, Claude
(86) Numéro de dépôt international: FR9902036
(87) Numéro de publication internationale: WO00024259

(56) Documents cités:
- EP-A- 0 517 569
- WO-A-95/07807

## Description

La présente invention a pour objet une composition liquide à activité fongicide, bactériostatique ou bactéricide ainsi que des procédés pour la préparation et la mise en oeuvre de la composition.

II est connu d'utiliser depuis longtemps des produits phytopharmaceutiques à base de sels minéraux, oxydes ou hydroxydes de cuivre, notamment pour leurs propriétés fongicides (mildiou de la vigne, ...) mais également leur pouvoir bactéricide (dépérissement bactérien des pêchers et abricotiers, bactériose à pseudomonas des pommiers et poiriers, ...) ou bactériostatique qui empêche l'installation de maladies bactériennes.

L'activité fongicide et bactéricide du cuivre dépend de la nature du composé cuprique et de la qualité de sa fabrication.

On utilise depuis plus d'un siècle la "bouillie bordelaise" pour le traitement de la vigne. D'abord préparée par le viticulteur, puis fabriquée de manière industrielle, elle est obtenue en neutralisant avec précision une solution de sulfate de cuivre par un lait de chaux. Cette bouillie, amenée à neutralité (pH = 7) est ensuite séchée, broyée et micronisée.

Parmi les autres produits à base de cuivre, on peut citer l'oxychlorure de cuivre, l'hydroxyde de cuivre, le carbonate de cuivre, l'oxyde cuivreux, ...

Ces sels minéraux, oxydes ou hydroxydes de cuivre, utilisés seuls ou en combinaison avec d'autres composés se présentent généralement sous la forme de poudres mouillables, granulés dispersibles, suspensions concentrées, poudre pour poudrage, etc..

Les sels minéraux, oxydes ou hydroxydes de cuivre peuvent également être associés à des fongicides minéraux, notamment le soufre ou organiques pour former dans ce dernier cas des organo-cupriques.

Parmi les matières actives organiques, on peut notamment citer le folpel, le manèbe, le mancozèbe, le propinèbe, le zinèbe, le cymoxanil, le metirame-zinc.

Les formulations se présentent sous les formes décrites ci-dessus.

En dehors des poudres pour poudrage, les autres compositions comprennent généralement des agents tensioactifs, mouillants, dispersants, émulsionnants, anti-mousse, etc... qui contribuent à la stabilité des formulations puis à la mise en oeuvre des produits et en particulier à leur dispersion dans l'eau pour l'obtention de bouillies de traitement.

En complément du choix des sels minéraux, oxydes ou hydroxydes de cuivre et de la sélection des tensioactifs, les formulateurs cherchent à améliorer l'efficacité des produits carie degré de protection d'un composé cuprique contre les attaques de champignons et de bactéries est en étroite relation avec l'aptitude de celui-ci à saturer la surface du végétal par formation d'un film microscopique de particules. L'adhérence au végétal suivie d'une résistance aux pluies élevées est également l'un des objectifs recherché par les fabricants.

Depuis quelques temps et en particulier pour le traitement de la vigne, de nombreux produits utilisant l'hydroxyde de cuivre comme matière active apparaissent sur le marché.

L'optimisation des formulations à base d'hydroxyde de cuivre, en particulier des suspensions concentrées, a été faite par :
- la recherche d'une structure particulière des particules : fines aiguilles cristallisées, structure aciculaire ;
- l'amélioration de la réduction de leur taille obtenue par micronisation ou par un procédé chimique de fabrication de l'hydroxyde de cuivre, celle-ci pouvant atteindre de 0,3 à 0,4 µm ;
- le choix des tensioactifs et des co-formulants capables de stabiliser la formulation et d'en augmenter l'efficacité.

EP 0517569 décrit une composition phytosanitaire fongicide comprenant du tallate de cuivre, un solvant terpénique et, le cas échéant, un ou plusieurs émulsifiants. Dans cette composition le solvant terpénique permet d'améliorer l'efficacité du tallate de cuivre, lequel constitue une substance active lipophile.

FR 2 599 592 décrit des formulations liquides pour le traitement préventif et curatif des maladies cryptogamiques de type oïdium comportant une substance active minérale lipophile consistant en du soufre broyé fin ou micronisé, en suspension dans un liquide composé d'un mélange d'huile de pin et d'eau, l'huile de pin améliorant l'efficacité du soufre.

Les travaux des inventeurs ayant abouti à la présente invention ont permis d'établir que l'efficacité des sels minéraux, oxydes ou hydroxydes de cuivre pouvait être, de manière surprenante, améliorée lorsque ceux-ci étaient associés à un dérivé terpénique.

Cette découverte est inattendue dans la mesure où l'homme du métier ne s'attendait pas à ce que l'efficacité des sels minéraux, oxydes ou hydroxydes de cuivre soit améliorée par l'addition de dérivés terpéniques en raison de la différence de nature physicochimique entre les sels minéraux, oxydes ou hydroxydes de cuivre d'une part, et l'espèce métallique soufre d'autre part, notamment en raison du fait que le soufre est essentiellement lipophile, alors que les sels minéraux, oxydes ou hydroxydes de cuivre sont essentiellement hydrophiles.

L'invention a pour objet une composition phytosanitaire, fongicide, bactéricide ou bactériostatique comprenant au moins un sel minéral, un oxyde ou un hydroxyde de cuivre en suspension dans une émulsion aqueuse d'au moins un dérivé terpénique.

Les émulsions aqueuses couvrent également les microémulsions.

Le sel minéral, l'oxyde ou l'hydroxyde de cuivre consiste en l'un ou un mélange de ceux mentionnés précédemment, l'hydroxyde de cuivre (Cu(OH)₂) étant préféré.

Les dérivés terpéniques au sens de la présente invention sont des molécules organiques contenant dix atomes de carbone dans leur structure.

Il s'agit donc essentiellement des monoterpènes.

Les dérivés terpéniques peuvent être acycliques, monocycliques ou bicycliques.

On peut citer notamment les exemples suivants :
1) les carbures terpéniques :
   a) carbures terpéniques acycliques : myrçène, alloöcymène... ;
   b) carbures terpéniques monocycliques : dipentène, terpinolène, p-cymène, limonène... ;
   c) carbures terpéniques bicycliques : α-pinène, β-pinène ou δ-3-carène... ;
2) les composés suivants:
   a - les dérivés oxydés de carbure terpénique : cinéols ;
   b- les alcools terpéniques: boméol, fenchol, menthanol, terpinéols, géraniol, terpinène-1 ol-4, ... ;
   c - les aldéhydes et les cétones : camphre, fenchone ;
3) les mélangés des produits précédemment cités, notamment des alcools terpéniques et carbures terpéniques ;
4) les huiles essentielles contenant les mélanges précédents en différentes proportions, par exemple l'huile essentielle de *Malalenca alternifolia* (ou tea-tree oil) ;
5) les huiles de pin d'origine naturelle ou de synthèse qui sont définies comme étant des mélanges d'alcools et de carbures terpéniques.

On préfère tout particulièrement l'huile de pin à 90 % d'alcools terpéniques.

La suspension selon l'invention contient avantageusement également au moins un agent tensioactif pour ses propriétés émulsifiantes, mouillantes, inhibitrices de la croissance de cristaux, etc ...

On peut utiliser un tensioactif anionique, cationique, amphotère, zwitterionique et/ou non ionique.

On préfère les tensioactifs anioniques et non ioniques seuls ou en mélange.

Les composés suivants conviennent particulièrement bien au but de l'invention :
- acides gras éthoxylés,
- alcools gras éthoxylés,
- alkyl benzène sulfonate de calcium,
- alkyl naphtalène-sulfonates,
- alkyl phénols éthoxylés,
- copolymères séquencés OE/OP,
- copolymères séquencés OP/OE,
- diisopropyl naphtalène sulfonates,
- diméthyl naphtalène sulfonates,
- di-n-butyl naphtalène sulfonates,
- dodécylphénols éthoxylés,
- dodécylbenzène sulfonate de sodium,
- esters phosphoriques d'alkyl polyéthers (formes acides et/ou sels)
- esters phosphoriques d'aryl phénols éthoxylés (formes acides et/ou sels),
- esters phosphoriques de polyarylphénols éthoxylés (formes acides et/ou sels),
- huile de ricin éthoxylée,
- isopropyl naphtalène sulfonates,
- lignosulfonates,
- méthyl dinaphtalène sulfonates,
- méthyl naphtalène sulfonates,
- n-butyl naphtalène sulfonates,
- octyl phénols éthoxylés,
- phényl sulfonates,
- polyalkyl naphtyl méthane sulfonates,
- polyacrylates,
- polyaryl phénols éthoxylés,
- polycarboxylates,
- polyvinylpyrrolidone et ses dérivés,
- sels de condensats crésol-formol sulfonés,
- sels de condensats d'acide naphtalène sulfonique,
- sels de copolymères acide acrylique - ester acrylique,
- sels de copolymères acide maléique - oléfine,
- sels de copolymères anhydride maléique -isobutylène,
- sulfates d'alkyl phénols éthoxylés,
- sulfates de polyaryl phénol éthoxylés,
- sulfosuccinates,
- taurates,
- tristyryl phénols éthoxylés...

Les suspensions concentrées de la présente invention comprennent avantageusement de 200 à 600 g/l, préférentiellement 300 à 500 g/l de cuivre, du sel minéral, de l'oxyde ou de l' hydroxyde de cuivre exprimé par rapport à l'élément cuivre. Les teneurs en terpènes des formulations sont comprises entre 50 et 400 g/l, préférentiellement 80 à 200 g/l.

Les teneurs en tensioactif(s) des formulations sont comprises entre 20 et 100 g/l, préférentiellement 30 à 60 g/l.

Les compositions liquides de l'invention, également appelées suspensions concentrées ou "flow" peuvent être préparées en micronisant la matière active, éventuellement mélangée avec une partie ou l'ensemble des autres ingrédients, par passage dans un broyeur spécifique (par exemple, un broyeur à billes du type ®DYNO-MILL) jusqu'à obtention d'une suspension homogène stable.

La micronisation mécanique peut être évitée et un simple mélange peut être suffisant si l'on utilise une matière active déjà micronisée soit mécaniquement, soit par le procédé de synthèse. Dans l'un ou l'autre cas, la micronisation est conduite jusqu'à obtention d'un diamètre de particules de sels minéraux, oxydes ou hydroxydes de cuivre non supérieur à 6 µm.

Un exemple d'hydroxyde de cuivre pouvant convenir pour la préparation d'une composition par simple mélange est l'hydroxyde de cuivre technique fabriqué par NORDDEUTSCHE AFFINERIE commercialisé par URANIA AGROCHEM GmBH.

On peut également utiliser un hydroxyde de cuivre préparé conformément aux procédés décrits dans US 3,194,749 et US 4,944,935.

Les compositions de l'invention ont une activité fongicide, bactéricide ou bactériostatique nettement améliorée par rapport aux compositions de l'état de la technique ne contenant pas de dérivé terpénique.

Ce gain d'efficacité permet de réduire les quantités de cuivre appliqué sur les plantes lors des traitements.

Cette réduction de dose est très avantageuse car elle permet de réduire l'action parfois dépressive que l'ion cuivre exerce sur les plantes et la phytotoxicité de celui-ci à l'égard de certains végétaux.

L'invention a également pour objet l'utilisation d'un dérivé terpénique pour améliorer l'efficacité d'un sel minéral, d'un oxyde ou d'un hydroxyde de cuivre dans une composition phytosanitaire, notamment fongicide, bactéricide ou bactériostatique.

L'invention a de plus pour objet un procédé de traitement de plantes par un produit à base de sel minéral, d'oxyde ou d'hydroxyde de cuivre, caractérisé en ce que l'on vaporise sur la plante à traiter une quantité efficace de bouillie préparée par mélange aqueux d'une composition de sel minéral, d'oyxde ou d'hydroxyde de cuivre en suspension dans une émulsion aqueuse contenant au moins un dérivé terpénique.

On donnera ci-après des exemples de compositions à base de sel minéral, d'oxyde ou d'hydroxyde de cuivre et de terpène selon l'invention ainsi que les résultats obtenus avec celles-ci sur le mildiou de la vigne (*Plasmopara viticola*).

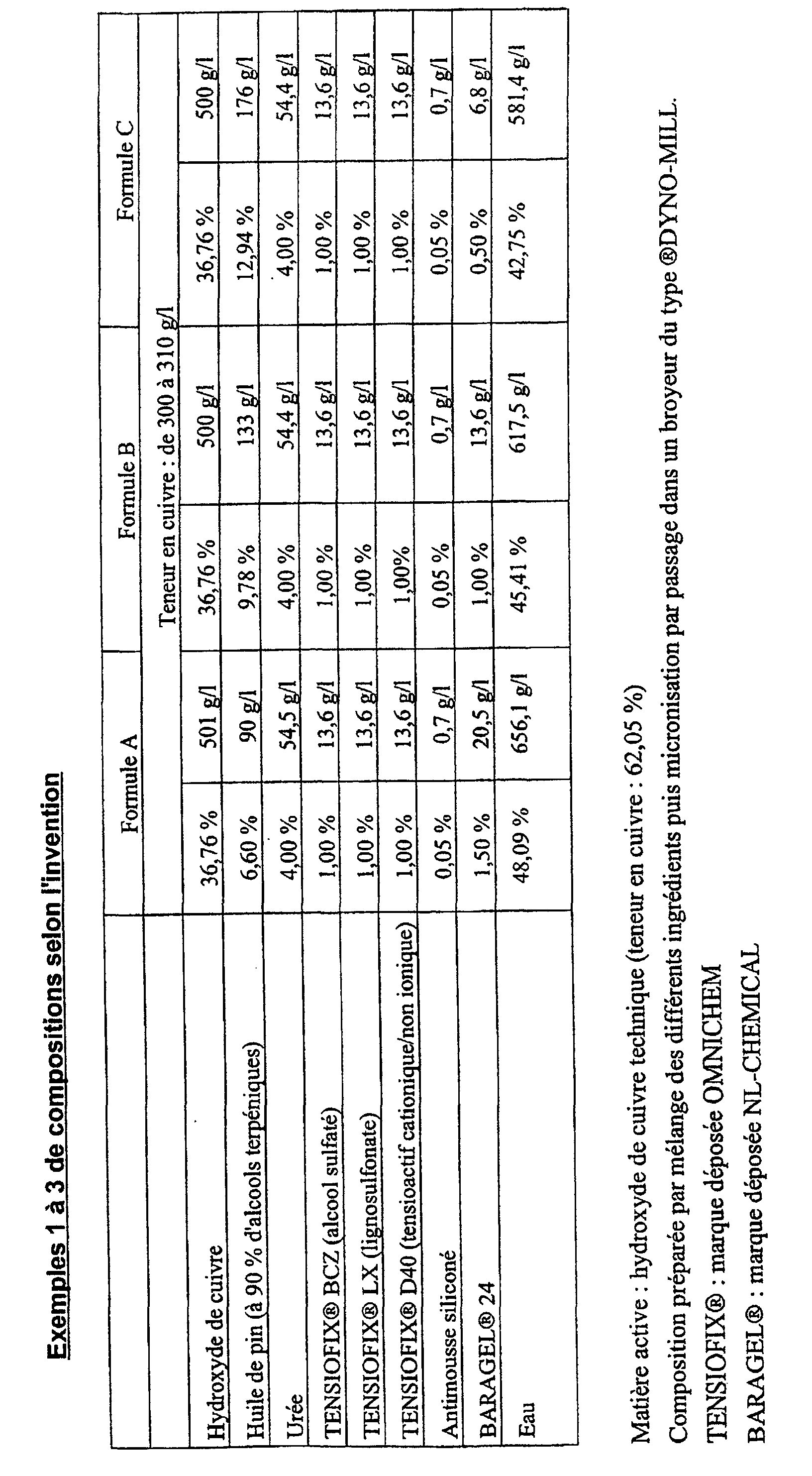

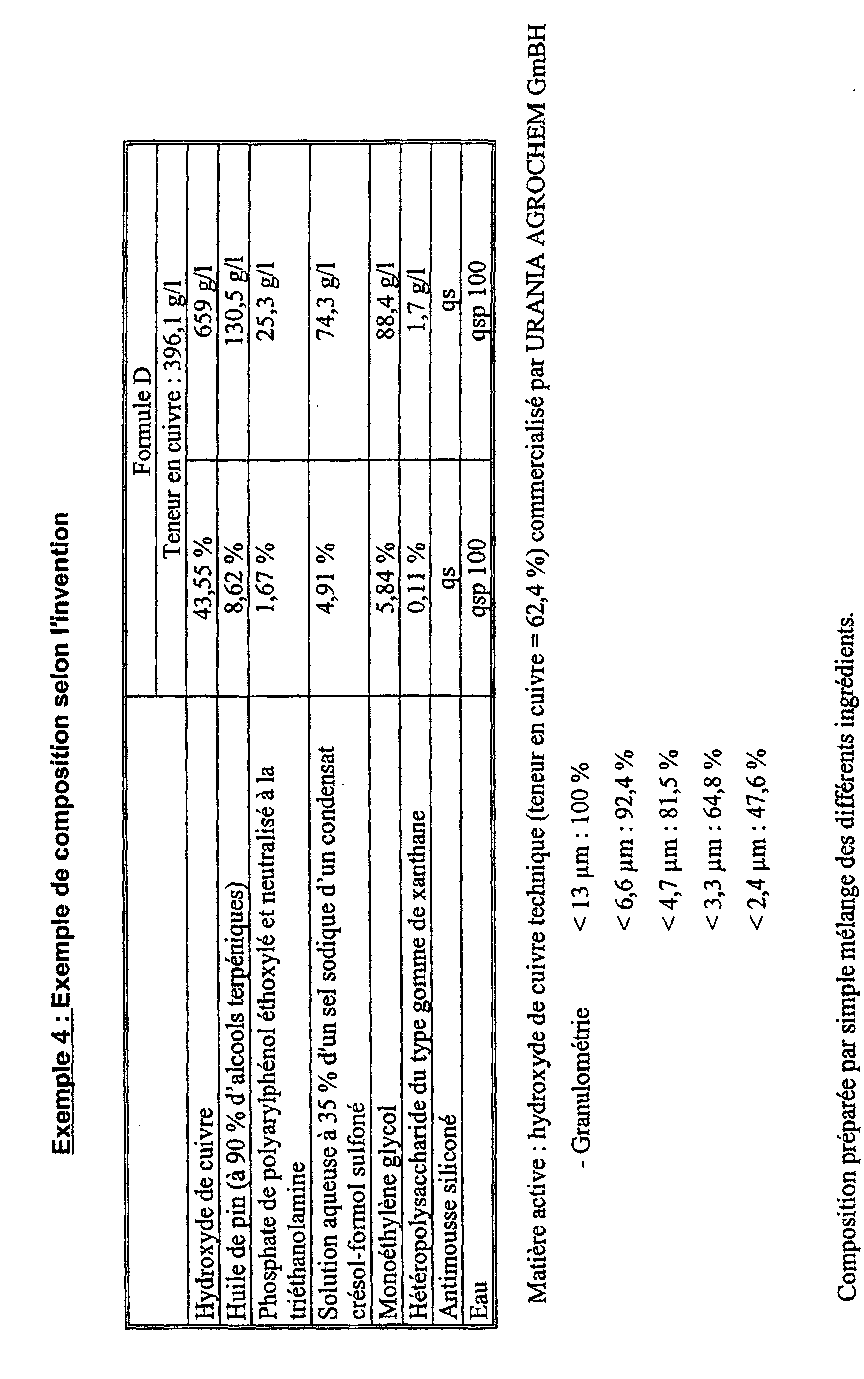

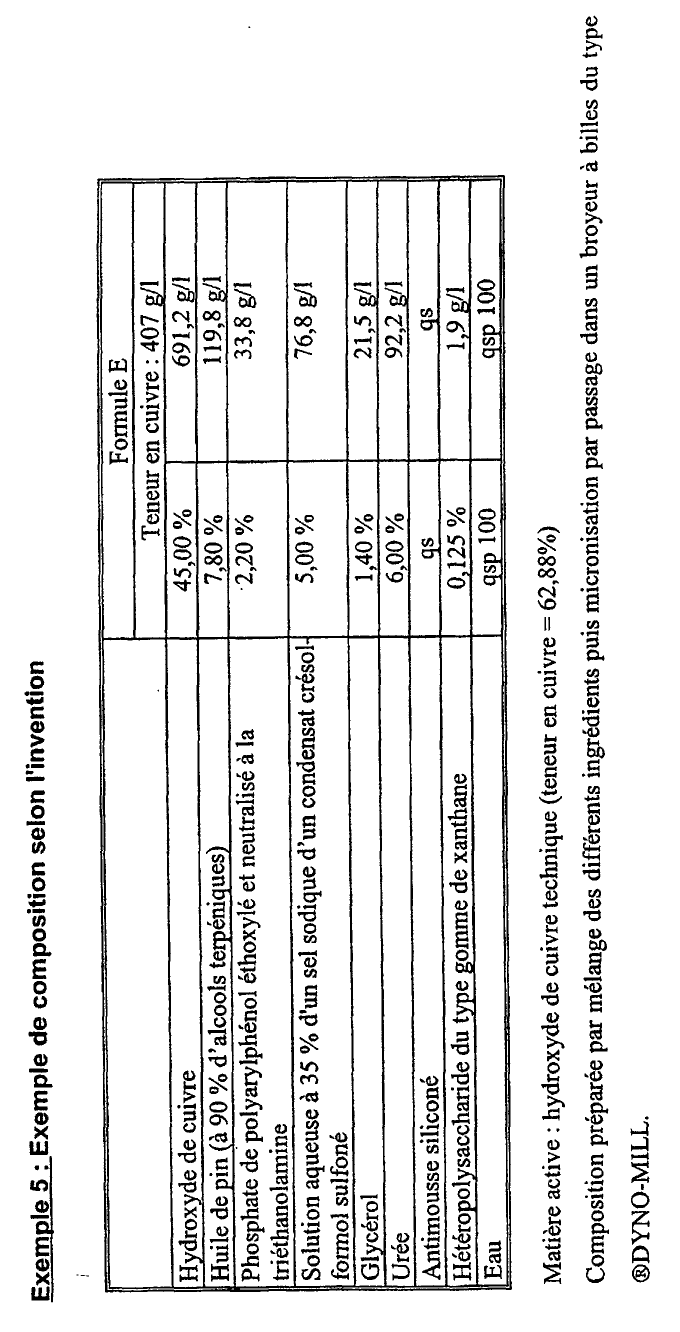

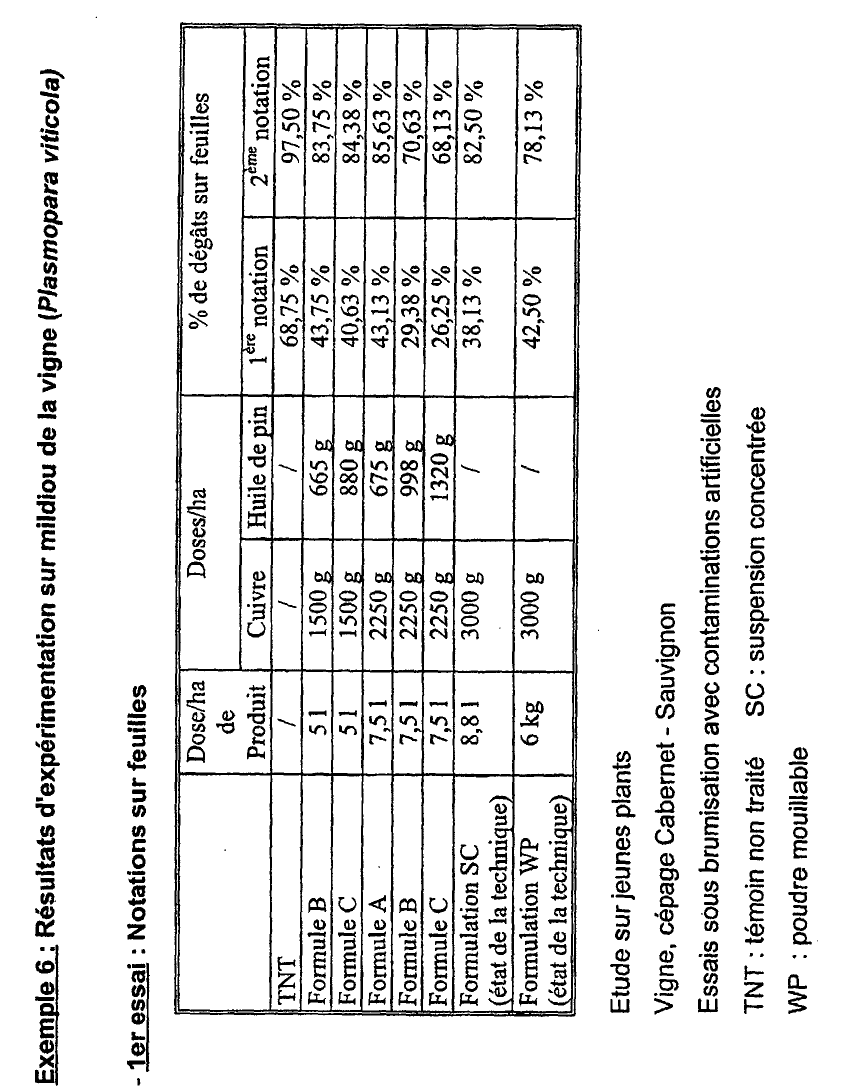

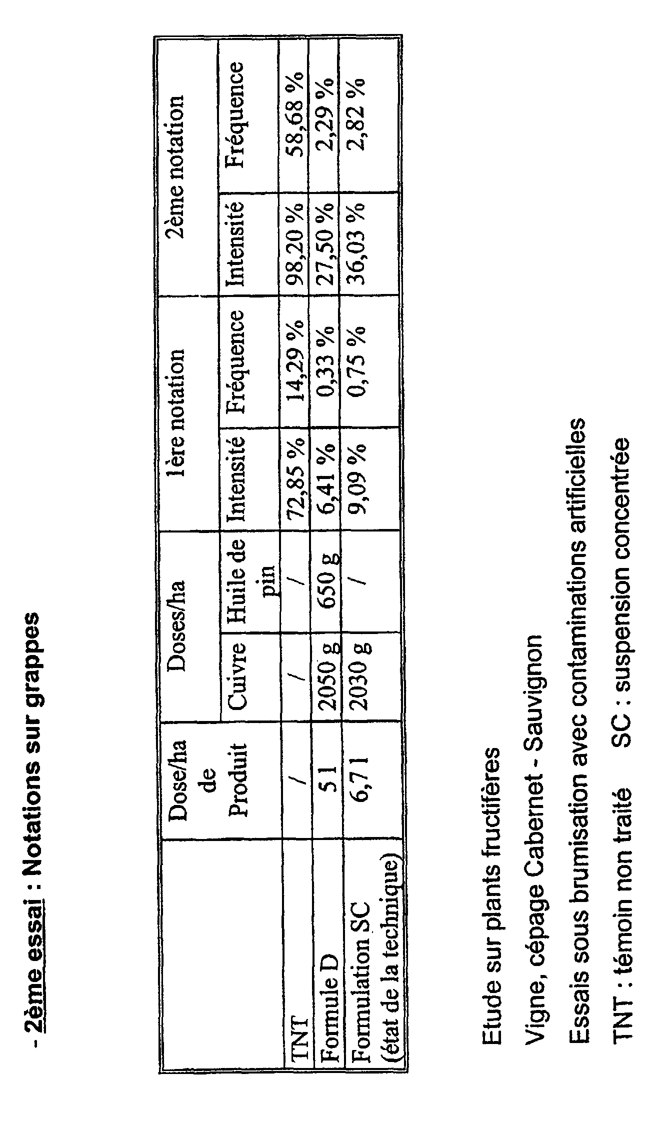

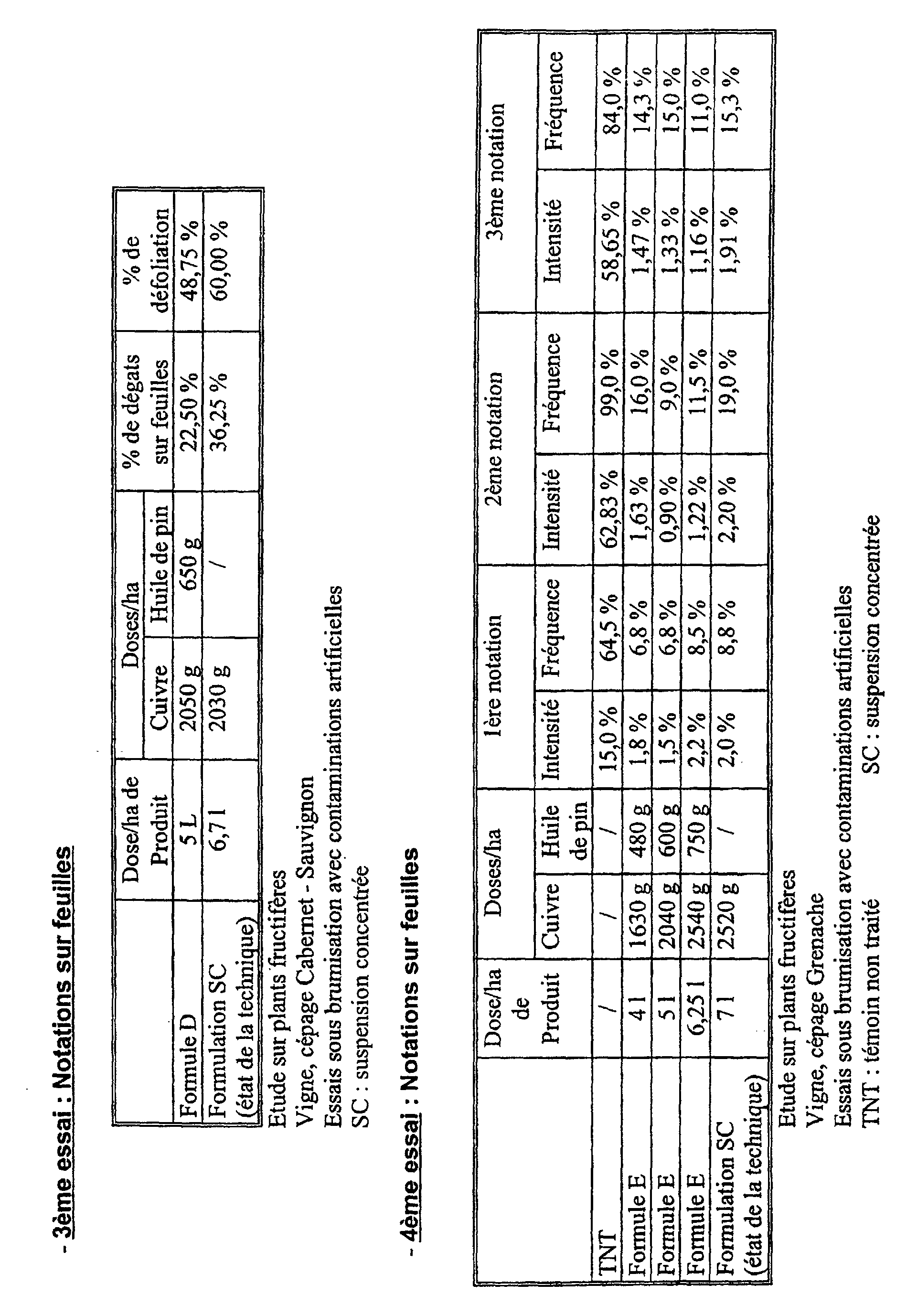

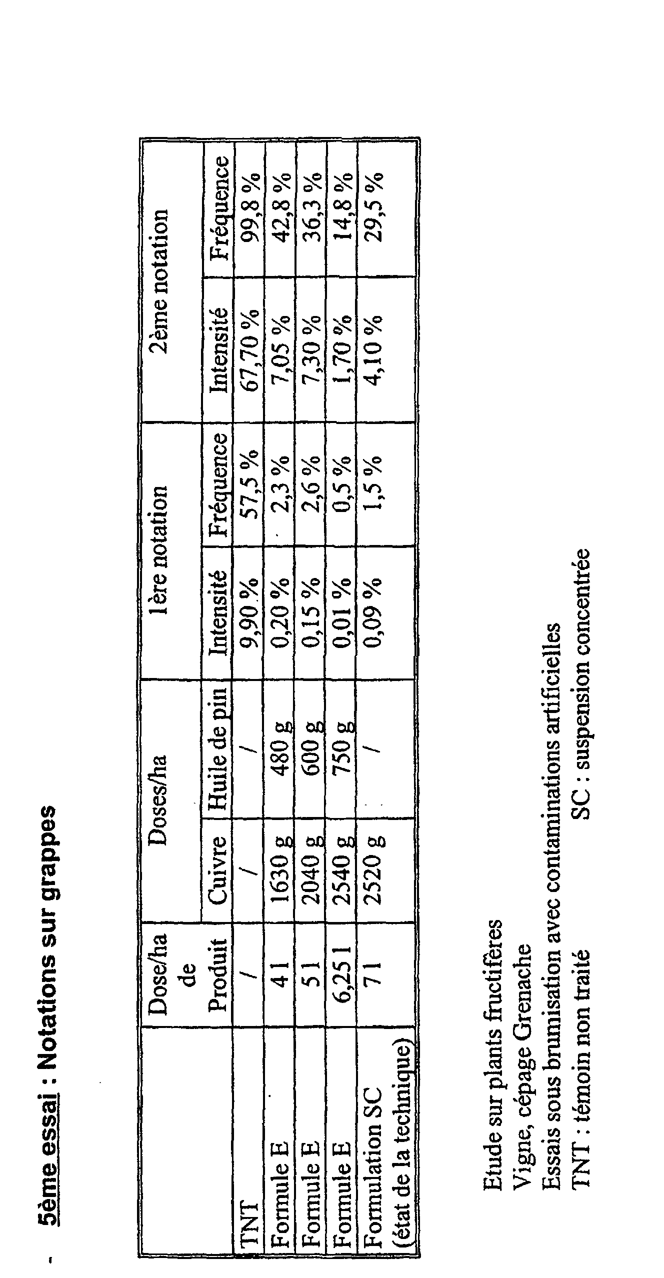

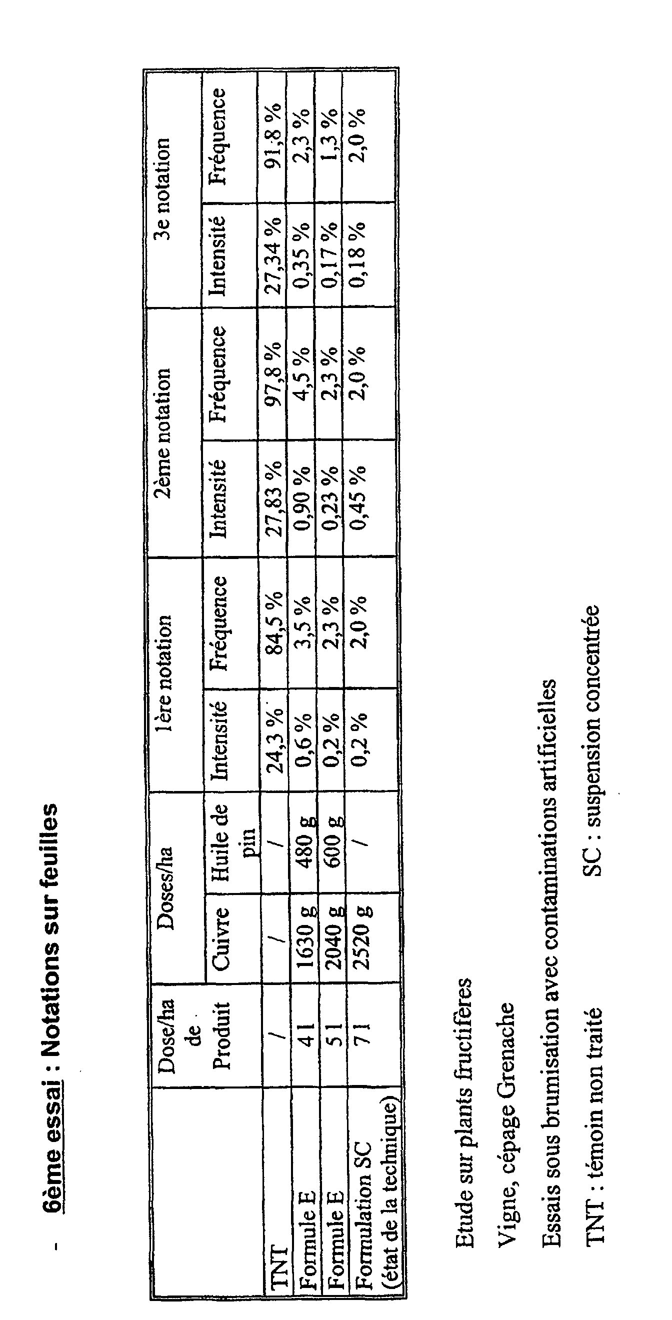

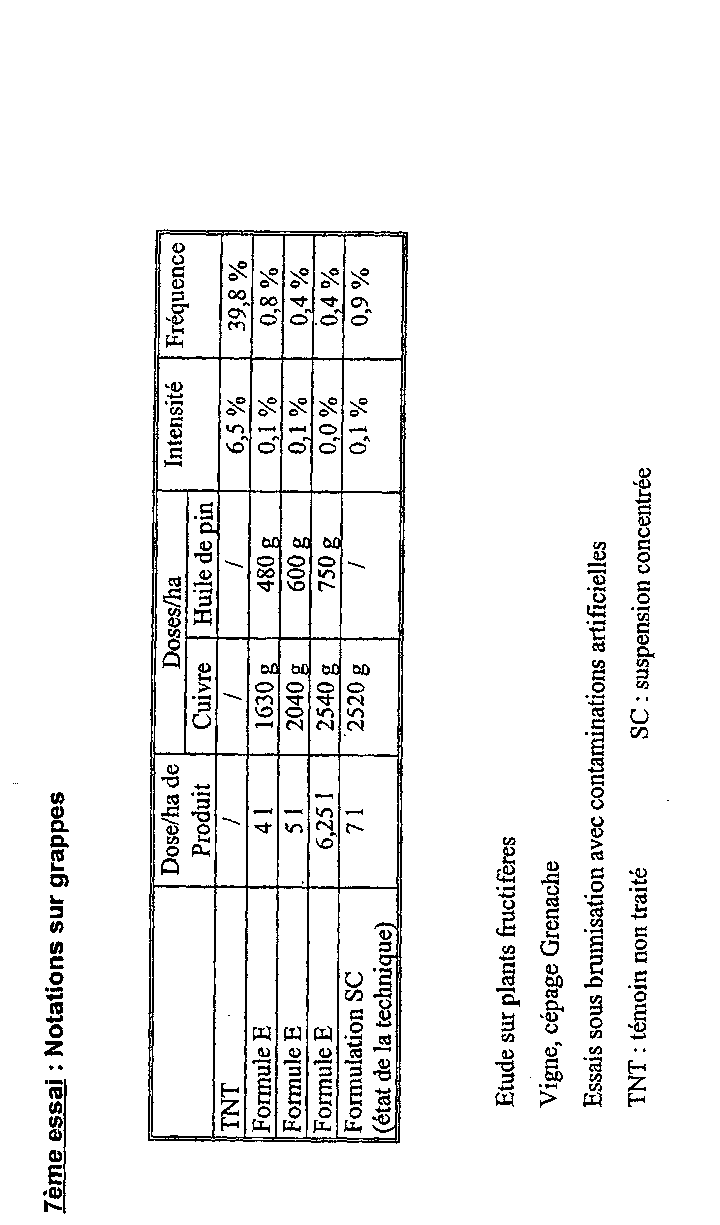

## Revendications

1. Composition phytosanitaire, fongicide, bactéricide ou bactériostatique comprenant au moins un sel minéral, un oxyde ou un hydroxyde de cuivre en suspension dans une émulsion aqueuse d'au moins un dérivé terpénique.

2. Composition selon la revendication 1, **caractérisée en ce que** le sel minéral, l'oxyde ou l'hydroxyde de cuivre est choisi parmi l'hydroxyde de cuivre, l'oxychlorure de cuivre, le carbonate de cuivre, l'oxyde cuivreux et leurs mélanges.

3. Composition selon la revendication 1 ou la revendication 2, **caractérisé en ce que** le sel minéral, l'oxyde ou l'hydroxyde de cuivre est l'hydroyxde de cuivre.

4. Composition selon l'une quelconque des revendications précédentes, **caractérisée en ce qu'**elle contient de 200 à 600 g/l, avantageusement de 300 à 500 g/l de cuivre, sous forme de sel minéral, d'oxyde ou d'hydroxyde de cuivre.

5. Composition selon l'une quelconque des revendications précédentes, **caractérisée en ce que** le diamètre des particules de sels minéraux, d'oxydes ou d'hydroxydes de cuivre n'est pas supérieur à 6 µm.

6. Composition selon l'une quelconque des revendications précédentes, **caractérisée en ce que** le dérivé terpénique est un monoterpène ou un mélange de monoterpènes.

7. Composition selon l'une quelconque des revendications précédentes, **caractérisée en ce que** le dérivé terpénique est choisi parmi les carbures terpéniques, les dérivés oxydés des carbures terpéniques, les alcools terpéniques, les aldéhydes et cétones terpéniques et leurs mélanges.

8. Composition selon l'une quelconque des revendications précédentes, **caractérisée en ce que** le dérivé terpénique est un mélange de carbures terpéniques et d'alcools terpéniques.

9. Composition selon l'une quelconque des revendications précédentes, **caractérisée en ce que** le dérivé terpénique est une huile essentielle.

10. Composition selon l'une quelconque des revendications précédentes, **caractérisée en ce que** le dérivé terpénique est une huile de pin.

11. Composition selon l'une quelconque des revendications précédentes, **caractérisée en ce que** le dérivé terpénique est une huile de pin à 90 % d'alcools terpéniques.

12. Composition selon l'une quelconque des revendications précédentes, **caractérisée en ce qu'**elle contient de 50 à 400 g/l, avantageusement de 80 à 200 g/l de dérivé(s) terpénique(s).

13. Composition selon l'une quelconque des revendications précédentes, **caractérisée en ce qu'**elle comprend au moins un agent tensioactif.

14. Composition selon l'une quelconque des revendications précédentes, **caractérisée en ce qu'**elle comprend de 20 à 100 g/l, avantageusement de 20 à 100 g/l d'agent(s) tensioactif(s).

15. Composition selon l'une quelconque des revendications précédentes, **caractérisée en ce que** l'agent tensioactif est choisi parmi les :
- acides gras éthoxylés,
- alcools gras éthoxylés,
- alkyl benzène sulfonate de calcium,
- alkyl naphtalène-sulfonates,
- alkyl phénols éthoxylés,
- copolymères séquencés OE/OP,
- copolymères séquencés OP/OE,
- diisopropyl naphtalène sulfonates,
- diméthyl naphtalène sulfonates,
- di-n-butyl naphtalène sulfonates,
- dodécylphénols éthoxylés,
- dodécylbenzène sulfonate de sodium,
- esters phosphoriques d'alkyl polyéthers (formes acides et/ou sels)
- esters phosphoriques d'aryl phénols éthoxylés (formes acides et/ou sels),
- esters phosphoriques de polyarylphénols éthoxylés (formes acides et/ou sels),
- huile de ricin éthoxylée,
- isopropyl naphtalène sulfonates,
- lignosulfonates,
- méthyl dinaphtalène sulfonates,
- méthyl naphtalène sulfonates,
- n-butyl naphtalène sulfonates,
- octyl phénols éthoxylés,
- phényl sulfonates,
- polyalkyl naphtyl méthane sulfonates,
- polyacrylates,
- polyaryl phénols éthoxylés,
- polycarboxylates,
- polyvinylpyrrolidone et ses dérivés,
- sels de condensats crésol-formol sulfonés,
- sels de condensats d'acide naphtalène sulfonique,
- sels de copolymères acide acrylique - ester acrylique,
- sels de copolymères acide maléique - oléfine,
- sels de copolymères anhydride maléique -isobutylène,
- sulfates d'alkyl phénols éthoxylés,
- sulfates de polyaryl phénol éthoxylés,
- sulfosuccinates,
- taurates,
- tristyryl phénols éthoxylés.

16. Procédé de préparation d'une composition telle que définie dans l'une quelconque des revendications précédentes par l'étape suivante :
- on micronise le sel minéral, l'oxyde ou l'hydroxyde de cuivre éventuellement mélangé avec une partie ou l'ensemble des autres ingrédients de la composition, jusqu'à obtention d'une suspension homogène stable dont la taille des particules est inférieure à 6 µm.

17. Procédé de préparation d'une composition telle que définie aux revendications 1 à 15, **caractérisé par** l'étape suivante :
- on mélange un sel minéral, un oxyde ou un hydroxyde de cuivre dont le diamètre des particules n'est pas supérieur à 6 µm avec les autres ingrédients de la composition jusqu'à obtention d'une suspension homogène stable.

18. Utilisation d'un dérivé terpénique pour améliorer l'efficacité d'un sel minéral, d'un oxyde ou d'un hydroxyde de cuivre dans une composition phytosanitaire, notamment fongicide, bactéricide ou bactériostatique.

19. Procédé de traitement de plantes par un produit à base de sel minéral, d'oxyde ou d'hydroxyde de cuivre, **caractérisé en ce que** l'on vaporise sur la plante à traiter une quantité efficace de bouillie préparée par mélange aqueux d'une composition de sel minéral, d'oxyde ou d'hydroxyde de cuivre en suspension dans une émulsion aqueuse contenant au moins un dérivé terpénique.

## Patentansprüche

1. Fungizide, bakterizide oder bakteriostatische Pflanzenschutzzusammensetzung, die mindestens ein anorganisches Kupfersalz, ein Kupferoxid oder -hydroxid suspendiert in einer wässrigen Emulsion wenigstens einer Terpenverbindung enthält.

2. Zusammensetzung nach Anspruch 1, **dadurch gekennzeichnet, dass** das anorganische Kupfersalz, das Kupferoxid oder -hydroxid aus Kupferhydroxid, -chloridoxid, -carbonat und -oxid und ihren Gemischen ausgewählt ist.

3. Zusammensetzung nach Anspruch 1 oder 2, **dadurch gekennzeichnet, dass** das anorganische Kupfersalz, das Kupferoxid oder -hydroxid Kupferhydroxid ist.

4. Zusammensetzung nach einem der vorhergehenden Ansprüche, **dadurch gekennzeichnet, dass** sie 200 bis 600 g/l und vorteilhafterweise 300 bis 500 g/l Kupfer in Form eines anorganischen Kupfersalzes, eines Kupferoxids oder -hydroxids enthält.

5. Zusammensetzung nach einem der vorhergehenden Ansprüche, **dadurch gekennzeichnet, dass** der Durchmesser der Teilchen aus anorganischem Kupfersalz, aus Kupferoxid oder -hydroxid höchstens 6 µm beträgt.

6. Zusammensetzung nach einem der vorhergehenden Ansprüche, **dadurch gekennzeichnet, dass** die Terpenverbindung ein Monoterpen oder ein Monoterpengemisch ist.

7. Zusammensetzung nach einem der vorhergehenden Ansprüche, **dadurch gekennzeichnet, dass** die Terpenverbindung aus Terpenkohlenwasserstoffen, oxidierten Derivaten der Terpenkohlenwasserstoffe, Terpenalkoholen, -aldehyden und -ketonen und ihren Gemischen ausgewählt ist.

8. Zusammensetzung nach einem der vorhergehenden Ansprüche, **dadurch gekennzeichnet, dass** die Terpenverbindung ein Gemisch aus Terpenkohlenwasserstoffen und Terpenalkoholen ist.

9. Zusammensetzung nach einem der vorhergehenden Ansprüche, **dadurch gekennzeichnet, dass** die Terpenverbindung ein etherisches Öl ist.

10. Zusammensetzung nach einem der vorhergehenden Ansprüche, **dadurch gekennzeichnet, dass** die Terpenverbindung ein Kiefernöl ist.

11. Zusammensetzung nach einem der vorhergehenden Ansprüche, **dadurch gekennzeichnet, dass** die Terpenverbindung ein Kiefernöl mit 90 % Terpenalkoholen ist.

12. Zusammensetzung nach einem der vorhergehenden Ansprüche, **dadurch gekennzeichnet, dass** sie 50 bis 400 g/l und vorteilhafterweise 80 bis 200 g/l Terpenverbindung/en enthält.

13. Zusammensetzung nach einem der vorhergehenden Ansprüche, **dadurch gekennzeichnet, dass** sie mindestens ein Tensid enthält.

14. Zusammensetzung nach einem der vorhergehenden Ansprüche, **dadurch gekennzeichnet, dass** sie 20 bis 100 g/l und vorteilhafterweise 20 bis 100 g/l Tensid/e enthält.

15. Zusammensetzung nach einem der vorhergehenden Ansprüche, **dadurch gekennzeichnet, dass** das Tensid ausgewählt ist aus:
- ethoxylierten Fettsäuren,
- ethoxylierten Fettalkoholen,
- Calciumalkylbenzolsulfonat,
- Alkylnaphthalinsulfonaten,
- ethoxylierten Alkylphenolen,
- EO/PO-Sequenzcopolymeren,
- PO/EO-Sequenzcopolymeren,
- Diisopropylnaphthalinsulfonaten,
- Dimethylnaphthalinsulfonaten,
- Di-n-butylnaphthalinsulfonaten,
- ethoxylierten Dodecylphenolen,
- Natriumdodecylbenzolsulfonat,
- Polyalkyletherphosphorsäureestern (in Form von Säuren und/oder Salzen)
- ethoxylierten Arylphenolphosphorsäureestern (in Form von Säuren und/oder Salzen)
- ethoxylierten Polyarylphenolphosphorsäureestern (in Form von Säuren und/oder Salzen)
- ethoxyliertem Ricinusöl,
- Isopropylnaphthalinsulfonaten,
- Lignosulfonaten,
- Methyldinaphthalinsulfonaten,
- Methylnaphthalinsulfonaten,
- n-Butylnaphthalinsulfonaten,
- ethoxylierten Octylphenolen,
- Phenylsulfonaten,
- Polyalkylnaphthylmethansulfonaten,
- Polyacrylaten,
- ethoxylierten Polyarylphenolen,
- Polycarboxylaten,
- Polyvinylpyrrolidon und seinen Derivaten,
- Salzen von sulfonierten Kresol-Formaldehyd-Kondensaten,
- Salzen von Kondensaten der Naphthalinsulfonsäure,
- Salzen von Acrylsäure-Acrylester-Copolymeren,
- Salzen von Maleinsäure-Olefin-Copolymeren,
- Salzen von Maleinsäureanhydrid-Isobutylen-Copolymeren,
- ethoxylierten Alkylphenolsulfaten,
- ethoxylierten Polyarylphenolsulfaten,
- Sulfosuccinaten,
- Tauraten und
- ethoxylierten Tristyrylphenolen.

16. Verfahren zur Herstellung einer Zusammensetzung wie in einem der vorhergehenden Ansprüche definiert durch folgende Stufe:
- Mikronisieren des anorganischen Kupfersalzes, des Kupferoxids oder -hydroxids, gegebenenfalls mit einem Teil oder allen der anderen Bestandteile der Zusammensetzung vermischt, bis zum Erhalten einer stabilen homogenen Suspension, deren Teilchengröße weniger als 6 µm beträgt.

17. Verfahren zur Herstellung einer Zusammensetzung wie in einem der Ansprüche 1 bis 15 definiert, **gekennzeichnet durch** die Stufe:
- Vermischen eines anorganischen Kupfersalzes, eines Kupferoxids oder -hydroxids, dessen Teilchendurchmesser nicht mehr als 6 µm beträgt, mit den anderen Bestandteilen der Zusammensetzung bis zum Erhalten einer stabilen homogenen Suspension.

18. Verwendung einer Terpenverbindung zur Erhöhung der Wirksamkeit eines anorganischen Kupfersalzes, eines Kupferoxids oder -hydroxids in einer insbesondere fungiziden, bakteriziden oder bakteriostatischen Pflanzenschutzzusammensetzung.

19. Verfahren zur Behandlung von Pflanzen mit einem Produkt auf der Basis eines anorganischen Kupfersalzes, eines Kupferoxids oder -hydroxids, **dadurch gekennzeichnet, dass** auf der zu behandelnden Pflanze eine wirksame Menge einer Brühe versprüht wird, die durch wässriges Vermischen einer Zusammensetzung aus einem anorganischen Kupfersalz, einem Kupferoxid oder -hydroxid suspendiert in einer mindestens eine Terpenverbindung enthaltenden wässrigen Emulsion hergestellt worden ist.

## Claims

1. Phytosanitary fungicidal, bactericidal or bacteriostatic composition comprising at least one mineral salt, an oxide or hydroxide of copper suspended in an aqueous emulsion of at least one terpene derivative.

2. Composition according to claim 1, **characterised in that** the mineral salt, oxide or hydroxide of copper is selected from among copper hydroxide, copper oxychloride, copper carbonate, cuprous oxide and mixtures thereof.

3. Composition according to claim 1 or claim 2, **characterised in that** the mineral salt, oxide or hydroxide of copper is copper hydroxide.

4. Composition according to any one of the preceding claims, **characterised in that** it contains from 200 to 600 g/l, advantageously from 300 to 500 g/l of copper in the form of a mineral salt, copper oxide or hydroxide.

5. Composition according to any one of the preceding claims, **characterised in that** the diameter of the particles of mineral salts, oxides or hydroxides of copper is no greater than 6 µm.

6. Composition according to any one of the preceding claims, **characterised in that** the terpene derivative is a monoterpene or a mixture of monoterpenes.

7. Composition according to any one of the preceding claims, **characterised in that** the terpene derivative is selected from among the terpene carbides, oxide derivatives of terpene carbides, terpene alcohols, terpene aldehydes and ketones and mixtures thereof.

8. Composition according to any one of the preceding claims, **characterised in that** the terpene derivative is a mixture of terpene carbides and terpene alcohols.

9. Composition according to any one of the preceding claims, **characterised in that** the terpene derivative is an essential oil.

10. Composition according to any one of the preceding claims, **characterised in that** the terpene derivative is a pine oil.

11. Composition according to any one of the preceding claims, **characterised in that** the terpene derivative is a pine oil containing 90% terpene alcohols.

12. Composition according to any one of the preceding claims, **characterised in that** it contains from SO to 400 g/l, advantageously from 80 to 200 g/l of terpene derivative(s).

13. Composition according to any one of the preceding claims, **characterised in that** it comprises at least one surfactant.

14. Composition according to any one of the preceding claims, **characterised in that** it comprises from 20 to 100 g/l, advantageously from 20 to 100 g/l of surfactant(s).

15. Composition according to any one of the preceding claims, **characterised in that** the surfactant is selected from among the:
- ethoxylated fatty acids,
- ethoxylated fatty alcohols,
- calcium alkyl benzene sulphonate,
- alkyl naphthalene sulphonates,
- ethoxylated alkyl phenols,
- sequenced EO/PO copolymers,
- sequenced PO/EO copolymers,
- diisopropyl naphthalene sulphonates,
- dimethyl naphthalene sulphonates,
- di-n-butyl naphthalene sulphonates,
- ethoxylated dodecylphenols,
- sodium dodecylbenzene sulphonate,
- phosphoric esters of alkyl polyethers (acid and/or salt forms),
- phosphoric esters of ethoxylated aryl phenols (acids and/or salt forms),
- phosphoric esters of ethoxylated polyaryl phenols (acid and/or salt forms),
- ethoxylated castor oil,
- isopropyl naphthalene sulphonates,
- lignosulphonates,
- methyl dinaphthalene sulphonates,
- methyl naphthalene sulphonates,
- n-butyl naphthalene sulphonates,
- ethoxylated octyl phenols,
- phenyl sulphonates,
- polyalkyl naphthyl methane sulphonates,
- polyacrylates,
- ethoxylated polyaryl phenols,
- polycarboxylates,
- polyvinylpyrrolidone and the derivatives thereof,
- salts of sulphonated cresol-formol condensates,
- salts of sulphonic naphthalene acid condensates,
- salts of acrylic acid-acrylic ester copolymers,
- salts of maleic acid-olefin copolymers,
- salts of maleic anhydride-isobutylene copolymers,
- ethoxylated alkyl phenol sulphates,
- ethoxylated polyaryl phenol sulphates,
- sulphosuccinates,
- taurates,
- ethoxylated tristyryl phenols.

16. Process for preparing a composition as defined in any one of the preceding claims by the following step:
- the mineral salt, oxide or hydroxide of copper, optionally mixed with some or all of the other ingredients of the composition, is or are micronised until a stable homogeneous suspension is obtained wherein the particle size is less than 6 µm.

17. Process for preparing a composition as defined in claims 1 to 15, **characterised by** the following step:
- a mineral salt, an oxide or hydroxide of copper wherein the diameter of the particles is not more than 6 µm is mixed with the other ingredients of the composition until a stable homogeneous suspension is obtained.

18. Use of a terpene derivative for improving the effectiveness of a mineral salt, oxide or hydroxide of copper in a phytosanitary composition, particularly a fungicidal, bactericidal or bacteriostatic composition.

19. Process for treating plants with a product based on mineral salt, oxide or hydroxide of copper, **characterised in that** an effective amount of slurry prepared by producing an aqueous mixture of a composition of mineral salt, oxide or hydroxide of copper suspended in an aqueous emulsion containing at least one terpene derivative is sprayed onto the plant to be treated.
